# EUROPÄISCHE PATENTSCHRIFT

(11) **EP 0 553 609 B1**
(45) Veröffentlichungstag und Bekanntmachung des Hinweises auf die Patenterteilung: **19.03.1997**
(21) Anmeldenummer: 93100008.7
(22) Anmeldetag: 02.01.1993
(51) Int. Cl.: B29C 45/00

(54) **Verfahren zum Spritzgiessen von Gegenständen aus wenigstens zwei Teilen**
Method for injection moulding of objects consisting of at least two parts
Procédé pour mouler par injection des objets constitués d'au moins deux parties

(30) Priorität: 29.01.1992 DE 4202351
(43) Veröffentlichungstag der Anmeldung: 04.08.1993
(73) Patentinhaber: Fickenscher & Co. GmbH Werkzeug- und Formenbau, D-95100 Selb (DE)
(72) Erfinder: Krause, Reinhard, W-8591 Brand bei Marktredwitz (DE)
(74) Vertreter: Matschkur, Götz, Lindner Patent- und Rechtsanwälte

(56) Entgegenhaltungen:
- WO-A-91/15981
- DE-C- 1 232 332
- FR-A- 1 578 138
- US-A- 3 917 789

## Beschreibung

Die Erfindung richtet sich auf ein Verfahren zum Spritzgießen von Gegenständen aus wenigstens zwei selbständigen, unlösbar, aber gegeneinander drehbeweglich verbundenen Teilen, wobei das jeweils nachfolgend gefertigte Teil zumindest teilweise in eine Formausnehmung des zuvor gefertigten Teils eingespritzt oder zumindest teilweise um das zuvor gefertigte Teil gespritzt wird.

Der Oberbegriff des Anspruchs 1 basiert auf der US-A-3917789.

Es gibt eine Vielzahl von Gebrauchsgegenständen, die im Wege des Spritzgießens aus den unterschiedlichsten Kunststoffen gefertigt werden, darunter auch solche, die aus mehreren beweglichen miteinander verbundenen Teilen bestehen, wobei es sich sowohl um Gelenkverbindungen, um eine Achse wirkende Drehbewegungen, lineare Bewegungen oder auch andere, zum Teil sehr komplexe Bewegungen der Teile gegeneinander handeln kann. Während solche Teile früher einzeln gefertigt, in aufwendigen manuellen oder automatischen Arbeitsvorgängen einander zugeordnet und montiert wurden, ist es mittlerweile bekannt, ausgehend von einem zuerst gefertigten Teil die mit diesem unlösbar, aber beweglich verbundenen Teile direkt anzuformen. Hierbei bildet das zuerst hergestellte Teil einen Ausschnitt der Form für das oder die im folgenden gefertigten Teile. Ein Verschmelzen miteinander verbundener Teile wird dabei dadurch verhindert, daß für das zuvor gefertigte Teil ein Kunststoff verwendet wird, der kurzfristig hohen Temperaturen aussetzbar ist.

Um bei diesem Verfahren eine unlösbare, aber dennoch bewegliche Verbindung zu erhalten, muß an dem zunächst fertiggestellten Kunststoffteil eine Hinterschneidung angeformt werden. Da eine solche Hinterschneidung für eine lösbare, aber gleichzeitig bewegliche Verbindung zweier Teile in nahezu allen Fällen rund umlaufend ausgebildet sein muß, ist zu ihrer Herstellung ein mindestens zweiteiliges Formwerkzeug erforderlich, dessen beide Hälften im Bereich der Hinterschneidung aneinander stoßen. Denn die Entnahme des Spritzlings, welcher bei der Herstellung eines nachfolgenden Kunststoffteils in dessen Formwerkzeug einen Ausschnitt bildet, kann ausschließlich dadurch erfolgen, daß die erste Form im Bereich der Hinterschneidung getrennt wird. Die Verwendung einer im Bereich der Hinterschneidung zu trennenden Form bringt jedoch eine Vielzahl von Nachteilen mit sich. Wenn die beiden Hälften des Formwerkzeugs nicht mit aller höchster Präzision ausgerichtet sind und nur einen minimalen Versatz aufweisen, ist am Spritzling bereits eine Kante vorhanden. Da gerade dieser die Hinterschneidung aufweisende Bereich im nachfolgenden Arbeitsschritt einen Ausschnitt des Formwerkzeugs für das nächste Spritzteil bildet, entsteht bei dessen Herstellung eine zu der Kante des ersten Teils komplementäre Oberflächenunebenheit. Diese ineinander greifenden Kanten bilden gewissermaßen einen Anschlag für die Relativbewegung der beiden verbundenen Teile gegeneinander. Außerdem treten durch diese Oberflächenunebenheiten erhöhte Reibungskräfte auf. Doch selbst bei einer äußerst genauen Ausrichtung der zwei Formhälften sind nicht alle Schwierigkeiten behoben. Denn bei einer geringsten Kantenverletzung einer oder beider Werkzeughälften bildet sich am zuvor gefertigten Teil ein Grat aus. Dieser Grat ruft am folgend hergestellten Spritzling eine komplementäre Nut hervor, so daß ein aus einer Rastnase und entsprechender Vertiefung bestehendes Rastelement erzeugt wird, was ebenfalls zu einer ungleichmäßigen Drehbewegung beiträgt. Da ab einer bestimmten Größe des Grates die Drehbeweglichkeit erheblich eingeschränkt oder sogar unmöglich ist, sind zur Vermeidung von Ausschuß relativ kurze Standzeiten der Formwerkzeuge einzuhalten. Hieraus ergeben sich erhebliche Unkosten für die Herstellung der Formwerkzeuge.

Aus diesen Problemen ergibt sich das der Erfindung zugrundeliegende Problem, ein Verfahren zum Spritzgießen von Gegenständen aus wenigstens zwei selbständigen, unlösbar, aber gegeneinander drehbeweglich verbundenen Teilen zu schaffen, bei welchem das jeweils zuvor gefertigte Teil einen Ausschnitt der Form für das nachfolgend hergestellte Teil bildet und im Bereich der die unlösbare, aber gegeneinander drehbewegliche Verbindung der beiden Teile bewirkenden Hinterschneidung prinzipbedingt eine völlig glatte Oberfläche aufweist. Mit anderen Worten, die Erfindung versucht, die Entstehung von Graten oder Kanten durch ein vom vorstehend beschriebenen Verfahren prinzipiell abweichendes Verfahren zu erreichen.

Zu diesem Zweck sieht die Erfindung ein Verfahren gemäß Anspruch 1 vor. Die Längsachse des an dem zuerst hergestellten Teil angeformten, hohlzylindrischen Elements definiert dabei die Rotationsachse der drehbeweglichen Verbindung. Ein Teil der Oberfläche dieses hohlzylindrischen Elements - entweder der innere oder der äußere Zylindermantel - dient als Gleitfläche für das beweglich mit dem ersten verbundene Teil. Die für die Unlösbarkeit der Verbindung notwendige Hinterschneidung wird durch Verformung des hohlzylindrischen Elements beim Spritzvorgang für das drehbar angelenkte Spritzteil erzeugt. Die Herstellung eines hohlzylindrischen Elements kann ohne Trennung des Formwerkzeugs zumindest in dem betreffenden Bereich erfolgen. Vielmehr wird ein Teil der Form nach Fertigstellung des Spritzlings in achsparalleler Richtung des Hohlzylinders entfernt. Somit befinden sich die an den Berührungsstellen der für die Entnahme des Kunststoffteils notwendigen beiden Formhälften unvermeidlich auftretenden Grate und/oder Kanten außerhalb des Berührungsbereichs der beiden drehbeweglich miteinander verbundenen Teile. Die Oberflächen des hohlzylindrischen Elements sind daher optimal glatt. Diese Oberflächeneigenschaft ändert sich auch bei der Verformung des hohlzylindrischen Elements zu einer rotationssymmetrischen Hinterschneidung nicht. Daher wir die Drehbeweglichkeit der einzelnen Teile des fertigen Gegenstands nicht beeinträchtigt und hängt insbesondere nicht von schwer zu beherrschenden Herstellungsfaktoren ab.

Wenn ein nachfolgend gefertigtes Teil zumindest teilweise in eine Formausnehmung des zuvor gefertigten Teils eingespritzt wird, hat es sich als günstig erwiesen, daß an dem jeweils zuerst hergestellten Teil in dessen Verbindungsbereich zu einem nachfolgend herzustellenden, drehbeweglichen Teil ein etwa hohlzylindrisches, an seiner Innenseite gratfreies Element angeformt wird, welches daraufhin von einer Form für das nachfolgende Teil umschlossen wird, deren Innenseite im Bereich des hohlzylindrischen Elements mit einer über dessen gesamten Umfang querschnittlich konstanten Vertiefung versehen ist, und sodann das folgende Teil gespritzt wird, wobei das zuerst hergestellte Teil durch den Druck des eingespritzten Werkstoffs im Bereich des Hohlzylinders nach außen gedrückt wird und der Vertiefung in der Forminnenseite anliegt. Die Herstellung des hohlzylindrischen, an seiner Innenseite gratfreien Elements kann - wie oben bereits beschrieben - mittels eines nach der Erstarrung axial zurückziehbaren, zylindrischen Kerns bewirkt werden. Nach der Entnahme dieses zuerst hergestellten Teils aus seiner Form wird es zur Herstellung eines weiteren, drehbeweglich verbundenen Teils derart in eine Form eingelegt, daß das hohlzylindrische Element im Bereich seines freien Endes an der Außenseite dicht umschlossen wird. Diese Form, von der das hohlzylindrische Element mit seinem Innenraum in diesem Zustand einen Ausschnitt bildet, weist in dem Bereich, der der äußeren Mantelfläche des hohlzylindrischen Elements benachbart ist, eine über den gesamten Umfang dieses Elements querschnittlich konstante Vertiefung auf. Somit befindet sich zwischen dem Außenmantel des hohlzylindrischen Elements und dem dieses umschließenden Formteil ein ringförmiger Hohlraum. Dieser kann in Längsrichtung des Hohlzylinders an einer beliebigen, zwischen dessen beiden Enden liegenden Stelle angeordnet sein oder auch nahezu die gesamte Höhe des hohlzylindrischen Elements umfassen. In dem nun folgenden Spritzvorgang füllt der Kunststoff die Form sowie den mit dieser in Verbindung stehenden Innenraum des hohlzylindrischen Elements vollständig aus. Durch den Druck des eingespritzten Werkstoffs verformt sich der relativ dünnwandige Hohlzylinder im Bereich des ringförmigen Hohlraums in radialer Richtung. Durch die hohe Elastizität des Kunststoffs wird diese Verformung erst nach dem Anliegen des ursprünglich hohlzylindrischen Elements an der Oberfläche der ringförmigen Vertiefung in der Forminnenseite begrenzt. Wegen der konstanten Wandstärke des hohlzylindrischen Elements bildet sich die Kontur der ringförmigen Vertiefung in der Forminnenseite auf die Oberfläche des inneren Zylindermantels ab, welche deshalb eine ringförmige Hinterschneidung gleichförmigen Querschnitts ausbildet.

Gemäß der Erfindung ist die Vertiefung in der Innenseite der Form für das nachfolgende Teil in axialer Richtung des Hohlzylinders konkav gekrümmt. Um das relativ dünnwandige, hohlzylindrische Element bei seiner Ausbeulung nicht durch eine querschnittlich stufenförmige Ausbildung der ringförmigen Vertiefung einer übermäßigen Dehnung zu unterwerfen und damit der Gefahr einer Beschädigung oder gar eines Abreißens auszusetzen, weist die ringförmige Vertiefung der Form in einem durch die Längsachse des Hohlzylinders verlaufenden Schnitt ein stetiges Profil auf. Einen optimalen Schutz des hohlzylindrischen Elements bei der Verformung gewährt dabei eine im Profil konkav gekrümmte Vertiefung.

Bei einer Abwandlung dieses ersten Verfahrens für eine Anwendung, bei der wenigstens ein nachfolgend gefertigtes Teil zumindest teilweise um das zuvor gefertigte Teil gespritzt wird, liegt die erfindungsgemäße Neuerung darin, daß an dem jeweils zuerst hergestellten Teil in dessen Verbindungsbereich zu einem nachfolgend herzustellenden, drehbeweglichen Teil ein etwa hohlzylindrisches, an seiner Außenseite gratfreies Element angeformt wird, welches daraufhin von einer Form für das nachfolgende Teil umschlossen wird, in welcher ein rotationssymmetrischer Kern konzentrisch zum hohlzylindrischen Element angeordnet ist, der in seinem in das hohlzylindrische Element ragenden Abschnitt einen sich verjüngenden Querschnitt aufweist, und sodann das folgende Teil gespritzt wird, wobei das zuerst hergestellte Teil durch den Druck des eingespritzten Werkstoffs im Bereich des Hohlzylinders nach innen gedrückt wird und dem sich verjüngenden Abschnitt des Kerns anliegt. Auch bei diesem Verfahren wird also an dem zuvor gefertigten Teil ein hohlzylindrisches Element angeformt, wobei es nun vor allem darauf ankommt, daß die Außenseite des hohlzylindrischen Elements völlig glatt ist, weil diese im fertigen Zustand die Gleitfläche der unlösbaren, aber beweglichen Verbindung darstellt. Aus diesem Grund wird bei dieser Ausführungsform des erfindungsgemäßen Verfahrens das nachfolgend hergestellte Kunststoffteil in den Außenraum des hohlzylindrischen Elements gespritzt. Damit sich durch den Druck des eingespritzten Werkstoffs der Hohlzylinder nach innen zu einer Hinterschneidung verformen kann, wird sein Innenraum durch einen rotationssymmetrischen Kern dichtend abgeschlossen, der ein Eindringen des Kunststoffs in diesen Bereich verhindert. Dieser Kern dient daneben jedoch auch zur Ausformung der Hinterschneidung. Er hat daher im Bereich der freien Stirnseite des hohlzylindrischen Elements einen dessen lichter Öffnung entsprechenden Querschnitt, welcher sich zum Grund des Hohlzylinders hin konzentrisch um die Längsachse desselben verjüngt. Somit wird beim Einspritzen des Werkstoffs trotz des auf ihn wirkenden Drucks der Hohlzylinder im Bereich seiner freien Stirnseite nicht verformt, da er an dieser Stelle von dem Kern abgestützt wird. Da diese abstützende Kraft in der Umgebung des sich verjüngenden Kerns fehlt, preßt der Druck des eingespritzten Werkstoffs den Hohlzylinder zusammen, bis dieser über einen Großteil seiner Höhe an dem sich verjüngenden Kern anliegt. Hierbei wird das Profil des Kerns infolge der gleichbleibenden Wandstärke des hohlzylindrischen Elements auf seine äußere Mantelfläche abgebildet. Hieraus ergibt sich die für die Unlösbarkeit der dennoch beweglichen Verbindung notwendige Hinterschneidung.

Schließlich entspricht es der Lehre der Erfindung, daß der sich verjüngende Abschnitt des Kerns in der Form für das nachfolgende Teil in axialer Richtung des Hohlzylinders konkav gekrümmt ist. Auch bei dem Umspritzen des hohlzylindrischen Elements ist Wert darauf zu legen, daß dieses nicht durch stufenartige Absetzungen des Kerns übermäßig gedehnt wird. Aus diesem Grund ist eine stetige Verjüngung des Kerns, insbesondere eine im Längsschnitt konkave Krümmung desselben, vorteilhaft.

Weitere Merkmale, Einzelheiten und Vorteile der Erfindung ergeben sich aus der folgenden Beschreibung einer bevorzugten Ausführungsform der Erfindung sowie anhand der Zeichnung. Hierbei zeigen:
- Fig. 1: ein an dem zuerst hergestellten Teil einer Verbindung angeformtes, hohlzylindrisches Element, teilweise im Längsschnitt,
- Fig. 2: eine fertige Verbindung zweier nach einem erfindungsgemäßen Verfahren hergestellter Kunststoffteile, teilweise im Längsschnitt und
- Fig. 3: eine fertige Verbindung von zwei gemäß einem abgewandelten Verfahren hergestellten Kunststoffteilen, ebenfalls teilweise im Längsschnitt.

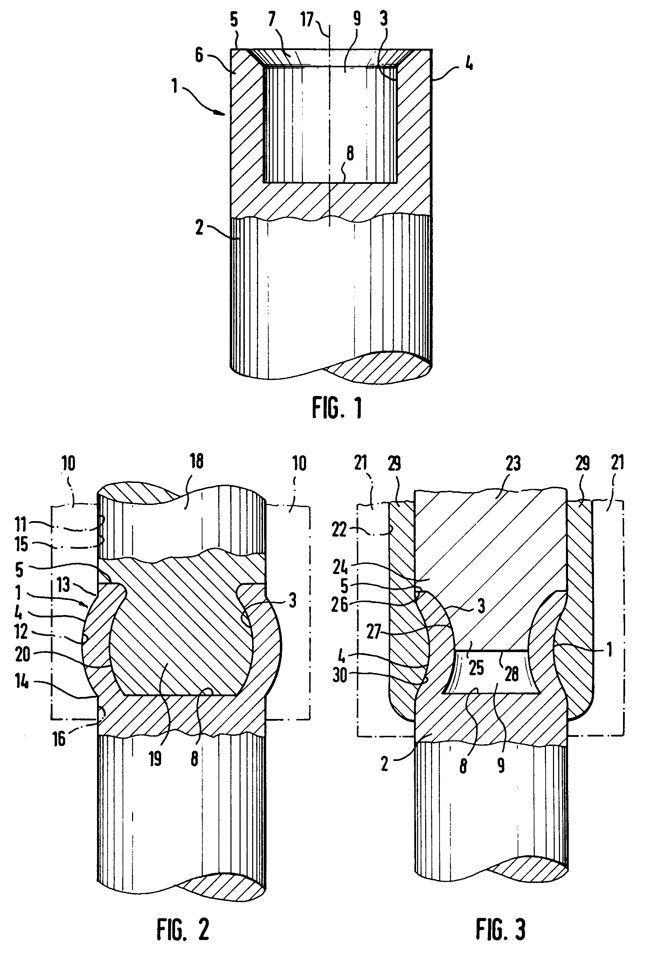

Das in Fig. 1 wiedergegebene hohlzylindrische Element 1 ist mit seinem Fußbereich 2 an einem ersten, nicht dargestellten Kunststoffteil angeformt. Bei beiden, erfindungsgemäßen Verfahren zur Herstellung einer unlösbaren, jedoch drehbeweglichen Verbindung zweier Kunststoffteile, aus deren Anwendung entweder eine Verbindung gemäß der Fig. 2 oder der Fig. 3 resultiert, bildet das in Fig. 1 dargestellte, hohlzylindrische Element 1 gleichermaßen den Ausgangspunkt für die Herstellung des zweiten Elements der Verbindung.

Das hohlzylindrische Element 1 weist einen inneren Zylindermantel 3 sowie einen äußeren Zylindermantel 4 auf. Je nach dem Herstellungsverfahren für das nachfolgend gefertigte Teil bildet der innere Zylindermantel 3 oder der äußere Zylindermantel 4 die Gleitfläche der drehbeweglichen Verbindung und muß aus diesem Grund eine völlig glatte Oberfläche aufweisen. Diese kann dadurch erzielt werden, daß derjenige Teil der Form, in welcher das zuvor gefertigte Kunststoffteil mitsamt dem hohlzylindrischen Element 1 hergestellt wird, im Bereich des Elements 1 aus einem einzigen Formwerkzeug gebildet ist, welches nach der Herstellung dieses Kunststoffteils in axialer Richtung des hohlzylindrischen Elements 1 entfernt wird. Obzwar das Formwerkzeug zur Entnahme des Spritzlings dennoch getrennt wird, befindet sich die Fuge nicht im Bereich des hohlzylindrischen Elements 1. Dieses ist daher an allen Begrenzungsflächen, insbesondere am inneren und äußeren Zylindermantel 3, 4, ideal glatt. Die gleichbleibend hohe Oberflächenqualität ist aber auch an der Stirnseite 5 des freien Endes 6 des hohlzylindrischen Elements 1, an einer eventuell vorhandenen Anfasung 7 in demselben Bereich 6 sowie am Grund 8 der zylindrischen Ausnehmung 9 gewährleistet.

Bei dem Verfahren zur Herstellung der in Fig. 2 gezeichneten Verbindung wird nach dem Entfernen des das hohlzylindrische Element 1 formenden Werkzeugs ein weiteres Formwerkzeug 10 am äußeren Zylindermantel 4 des hohlzylindrischen Elements 1 dichtend angelegt. Dieses Formwerkzeug 10 ist an seiner Innenseite 11 im Bereich zwischen der Stirnseite 5 des hohlzylindrischen Elements 1 und dem Grund 8 der umgrenzten, zylinderförmigen Ausnehmung 9 mit einer ringförmigen Vertiefung 12 versehen. Die Vertiefung 12 ist rotationssymmetrisch bezüglich der Längsachse 17 des hohlzylindrischen Elements 1. Die Übergänge 13, 14 zwischen der ringförmigen Vertiefung 12 und den zylindrischen Bereichen 15, 16 der Innenseite 11 des Formwerkzeugs 10 sind stetig. Die Vertiefung 12 wird beispielsweise durch die Rotation eines in der Zeichenebene liegenden Kreisabschnitts um die Längsachse 17 des hohlzylindrischen Elements beschrieben, so daß die Vertiefung 12 beispielsweise eine kugelschichtförmige Oberflächengestalt aufweist.

Zunächst befindet sich zwischen dem äußeren Zylindermantel 4 und der Vertiefung 12 in der Innenseite 11 des Formwerkzeugs 10 ein Hohlraum. Beim Einspritzen von Kunststoff in den vom Formwerkzeug 10 und von der Ausnehmung 9 des hohlzylindrischen Elements 1 gebildeten Raum wird das hohlzylindrische Element 1 im Bereich der Vertiefung 12 in der Form 10 nach außen gepreßt, bis der äußere Zylindermantel 4 auch im Bereich der Vertiefung 12 an der Innenfläche 11 des Formwerkzeugs 10 anliegt. Um das Entweichen der in dem ringförmigen Hohlraum eingeschlossenen Luft zu ermöglichen, können um den Umfang des Formwerkzeugs 10 verteilt Entlüftungsbohrungen vorhanden sein. Da jedoch das Formwerkzeug 10 zur Entnahme der fertiggestellten Kunststoffteile wegen der Ausbauchung im Bereich 12 ohnehin getrennt werden muß, kann die eingeschlossene Luft auch durch die Fuge zwischen den beiden Werkzeughälften entweichen. Sobald das nun entstandene Kunststoffspritzteil 18 erstarrt ist, wird das Formwerkzeug 10 getrennt und gibt die Verbindung frei.

Wegen der gleichbleibenden Wandstärke des ursprünglich hohlzylindrischen Elements 1 wird auch die innere Mantelfläche 3 rotationssymmetrisch zur Längsachse 17 deformiert. Der in den ursprünglich zylinderförmigen Innenraum 9 des Elements 1 ragende Teil 19 des zweiten Kunststoffteils 18 nimmt somit etwa tonnenförmige Gestalt an. Hierdurch ergibt sich die für die Unlösbarkeit der Verbindung verantwortliche Hinterschneidung. Aufgrund der Rotationssymmetrie des tonnenförmigen Elements 19, welche einerseits auf die Rotationssymmetrie der ringförmigen Vertiefung 12, andererseits auf die exakt senkrecht zur Längsachse 17 des ursprünglich hohlzylindrischen Elements 1 gerichtete Grundfläche 8 der Ausnehmung 9 zurückzuführen ist, kann eine Relativbewegung der beiden Verbindungselemente 1, 19 in Form einer Rotation um die Längsachse 17 des ursprünglich hohlzylindrischen Elements 1 erfolgen.

Da das Verbindungselement 1 sich wegen der elastischen Deformation in einem ständigen Spannungszustand befindet, resultiert eine zwischen den sich berührenden Oberflächen 3, 20 der Verbindungselemente 1, 19 fortwährend wirkende Normalkraft. Diese Normalkraft verursacht ein Reibungsmoment, welches jeder Verdrehung der beiden Verbindungselemente 1, 19 entgegenwirkt. Bei fehlendem oder geringem äußeren Drehmoment beharrt die Verbindung demnach in der eingestellten Position. Andererseits ist zur Überwindung des ständig vorhandenen Reibmoments wegen der sehr glatten und gratfreien Oberflächen 3, 20 der Verbindungselemente 1, 19 schon ein geringes äußeres Drehmoment ausreichend. Die Verbindung ist somit einerseits selbsthemmend, andererseits relativ leichtgängig.

Bei einem hiervon abweichenden Verfahren, mit dem die in Fig. 3 gezeichnete Verbindung hergestellt werden kann, wird das hohlzylindrische Element 1 nach der Entnahme aus seiner Form von einem zweiten Formwerkzeug 21 dichtend umschlossen. Das Formwerkzeug 21 liegt am äußeren Zylindermantel 4 des hohlzylindrischen Elements 1 ausschließlich in dessen Fußbereich 2 an. In einem Bereich, der sich etwa von der Grundfläche 8 der Ausnehmung 9 bis über die Stirnseite 5 des hohlzylindrischen Elements 1 hinaus erstreckt, weist die Innenseite 22 der Form 21 einen größeren Radius als das hohlzylindrische Element 1 auf.

Darüberhinaus wird der Innenraum 9 des hohlzylindrischen Elements 1 an dessen Stirnseite 5 von einem Kern 23 dichtend verschlossen. Der Kern 23 ragt etwa bis zur Hälfte der axialen Länge des hohlzylindrischen Elements 1 in die Ausnehmung 9 hinein. In seinem der Stirnseite 5 anliegenden Bereich 24 ist der Radius des Kerns 23 größer als der durch eine Anfasung 7 vergrößerte Innenradius des hohlzylindrischen Elements 1 an dessen Stirnseite 5. Von diesem Teil 24 des Kerns 23 ist der in den Innenraum 9 eintauchende Teil 25 unter Ausbildung einer kreisringförmigen, der Stirnseite 5 des Hohlzylinders 1 anliegenden Abstufung 26 abgesetzt. Die Mantelfläche 27 des Kernteils 25 von geringerem Querschnitt ist in dem an die Abstufung 26 grenzenden Bereich etwa komplementär zur Anfasung 7 geformt. Dieser etwa kegelstumpfförmige Bereich setzt sich zur Grundfläche 8 der Ausnehmung 9 hin als weitere Verjüngung des Kerns 23 fort. In diesem Teil der Mantelfläche 27 hat der Kern 23 etwa die Form eines einschaligen, zur Längsachse 17 des hohlzylinderförmigen Elements 1 rotationssymmetrischen Hyperboloids. Etwa im Bereich des geringsten Querschnitts dieses Hyperboloids wird der Kern 23 durch eine kreisrunde Stirnfläche 28 abgeschlossen.

Nachdem das Formwerkzeug 21 und der Kern 23 positioniert sind, wird in dem von der Innenwand 22 des Formwerkzeugs 21 einerseits sowie vom äußeren Zylindermantel 4 des hohlzylindrischen Elements 1 und dem Kern 23 andererseits begrenzten Hohlraum Kunststoff eingespritzt. Während das aus elastischem Werkstoff bestehende hohlzylindrische Element 1 im Bereich seiner Anfasung 7 durch den dieser anliegenden Teil 25 des Kerns 23 abgestützt wird, fehlt im zylinderförmigen Teil der Ausnehmung 9 eine den Druck des eingespritzten Werkstoffs kompensierende Gegenkraft. Daher wird das zuerst hergestellte Element 1 so sehr deformiert, daß dessen innere Mantelfläche 3 an der Oberfläche 27 des sich verjüngenden Teils 25 des Kerns 23 anliegt. Wegen des relativ geringen Abstands zwischen der Stirnseite 28 des Kerns 23 und des Grundes 8 der Ausnehmung 9 ist die dem ursprünglich hohlzylindrischen Element 1 innewohnende Formstabilität ausreichend, um den äußeren Druck in dem vom Kern 23 nicht abgestützten Bereich aufnehmen zu können. Nachdem die eingespritzte Kunststoffmasse zu einem zweiten Spritzling 29 erstarrt ist, wird das Formwerkzeug 21 durch Werkzeugtrennung entfernt und der Kern 23 in axialer Richtung 17 weggezogen.

Aufgrund der gleichbleibenden Wandstärke des ursprünglich hohlzylindrischen Elements 1 ist dessen äußere Mantelfläche 4 zu einer Gestalt deformiert worden, die zur Mantelfläche 27 des Kerns 23 etwa kongruent ist. Da sich der Kern 23 im Bereich 25 querschnittlich verjüngt, entsteht am Außenmantel 4 eine ringförmige Vertiefung, welche von dem nachfolgend hergestellten Teil 29 vollständig ausgefüllt wird. Bei einer ausreichenden Wandstärke des Kunststoffteils 29 behält dieses nach dem Entfernen der Formwerkzeuge 21, 23 seine ursprüngliche Form bei. Durch die geringförmige Vertiefung in der Außenseite 4 des ursprünglich hohlzylindrischen Elements 1 und die dazu komplementär geformte Oberfläche 30 des zuletzt hergestellten Spritzteils 29 wird somit eine die Unlösbarkeit der Verbindung bewirkende Hinterschneidung geschaffen. Darüberhinaus sind die einander berührenden Flächen 4, 30 der Verbindungselemente 1, 29 wegen der Rotationssymmetrie des Kerns 23 auch rotationssymmetrisch. Diese Eigenschaft ermöglicht ein gegenseitiges Verdrehen der Verbindungselemente 1, 29 um die Längsachse 17 der Verbindung.

Da das Verbindungselement 29 infolge seiner relativ großen Wandstärke etwa seine ursprüngliche Form beibehält, befindet sich das Verbindungselement 1 permanent in dem in Fig. 3 wiedergegebenen, deformierten Zustand. Wegen der Elastizität des Formteils 1 besteht zwischen den Berührungsflächen 4, 30 der Verbindungselemente 1, 29 ständig eine reibungserzeugende Normalkraft. Wie im in Fig. 2 dargestellten Fall bewirkt auch hier das ständig gegenwärtige Reibmoment eine Beharrung der Verbindung in der jeweiligen Position. Andererseits ist wegen der hohen Oberflächengüte, insbesondere der Gratfreiheit des Außenmantels 4 des Verbindungselements 1 auch die dieser anliegende Oberfläche 30 des Spritzlings 29 optimal glatt. Diese Tatsache trägt entscheidend dazu bei, daß für eine gegenseitige Verdrehung der Verbindungselemente 1, 29 bereits ein sehr geringes, von außen einwirkendes Drehmoment genügt.

## Patentansprüche

1. Verfahren zum Spritzgießen von Gegenständen aus wenigstens zwei selbständigen, gegeneinander drehbeweglich verbundenen Teilen, wobei das jeweils nachfolgend gefertigte Teil zumindest teilweise in eine Formausnehmung des zuvor gefertigten Teils eingespritzt oder zumindest teilweise um das zuvor gefertigte Teil gespritzt wird, wobei an dem jeweils zuerst hergestellten Teil in dessen Verbindungsbereich zu einem nachfolgend herzustellenden, drehbeweglichen Teil ein etwa hohlzylindirsches Element angeformt wird, dadurch gekennzeichnet, daß das hohlzylindrische Element (1) als elastisch deformierbares Element ausgebildet wird und zum Anformen des nachfolgenden Teils von einer Form (10; 21) für das nachfolgende Teil (18; 29) umschlossen wird, und bei der Herstellung dieses Teils (18; 29) entweder der Außenraum des von einem Kern (23) verschlossenen hohlzylindrischen Elements (1) oder dessen unverschlossener Innenraum (9) ausgespritzt wird, wobei das zuerst hergestellte Teil allein durch den Druck des eingespritzten Werkstoffs im Bereich des Hohlzylinders (1) zu einer rotationssymmetrischen, eine unlösbare Verbindung der Teile bewirkenden Hinterschneidung verformt wird.

2. Verfahren nach Anspruch 1, bei dem wenigstens ein nachfolgend gefertigtes Teil zumindest teilweise in eine Formausnehmung des zuvor gefertigten Teils eingespritzt wird, dadurch gekennzeichnet, daß an dem jeweils zuerst hergestellten Teil in dessen Verbindungsbereich zu einem nachfolgend herzustellenden, drehbeweglichen Teil (18) ein etwa hohlzylindrisches, an seiner Innenseite (3) gratfreies Element (1) angeformt wird, welches daraufhin von einer Form (10) für das nachfolgende Teil (18) umschlossen wird, deren Innenseite (11) im Bereich des hohlzylindrischen Elements (1) mit einer über dessen gesamten Umfang querschnittlich konstanten Vertiefung (12) versehen ist, und sodann das folgende Teil (18) gespritzt wird, wobei das zuerst hergestellte Teil durch den Druck des eingespritzten Werkstoffs im Bereich des Hohlzylinders (1) nach außen gedrückt wird und der Vertiefung (12) in der Forminnenseite (11) anliegt.

3. Verfahren nach Anspruch 2, dadurch gekennzeichnet, daß die Vertiefung (12) in der Innenseite (11) der Form (10) für das nachfolgende Teil (18) in axialer Richtung (17) des Hohlzylinders (1) konkav gekrümmt ist.

4. Verfahren nach Anspruch 1, bei dem wenigstens ein nachfolgend gefertigtes Teil zumindest teilweise um das zuvor gefertigte Teil gespritzt wird, dadurch gekennzeichnet, daß an dem jeweils zuerst hergestellten Teil in dessen Verbindungsbereich zu einem nachfolgend herzustellenden, drehbeweglichen Teil (29)ein etwa hohlzylindrisches, an seiner Außenseite (4) gratfreies Element (1) angeformt wird, welches daraufhin von einer Form (21) für das nachfolgende Teil (29) umschlossen wird, in welcher ein rotationssymmetrischer Kern (23) konzentrisch zum hohlzylindrischen Element (1) angeordnet ist, der in seinem in das hohlzylindrische Element (1) ragenden Abschnitt (25) einen sich verjüngenden Querschnitt aufweist, und sodann das folgende Teil (29) gespritzt wird, wobei das zuerst hergestellte Teil durch den Druck des eingespritzten Werkstoffs im Bereich des Hohlzylinders (1) nach innen gedrückt wird und dem sich verjüngenden Abschnitt (25) des Kerns (23) anliegt.

5. Verfahren nach Anspruch 4, dadurch gekennzeichnet, daß der sich verjüngende Abschnitt (25) des Kerns (23) in der Form für das nachfolgende Teil (29) in axialer Richtung (17) des Hohlzylinders (1) konkav gekrümmt ist.

## Claims

1. Method of injection moulding articles composed of at least two independent parts connected together so as to be rotatable relative to one another, wherein the respectively subsequently manufactured part is injected at least partly into a moulding recess of the previously manufactured part or is at least partly injection moulded around the previously manufactured part, wherein on the respectively first manufactured part, in its connecting region to a rotatable part to be manufactured subsequently, an approximately hollow-cylindrical element is formed, characterised in that the hollow-cylindrical element (1) is formed as a resiliently deformable element and, in order to mould on the subsequent part, is surrounded by a mould (10; 21) for the subsequent part (18; 29), and in the manufacture of this part (18; 29) either the outer chamber of the hollow-cylindrical element (1) sealed by a core (23) or its unsealed inner chamber (9) is injected, whereupon the part first manufactured, solely by the pressure of the injected material in the region of the hollow cylinder (1), is deformed into a rotationally symmetrical undercut region effecting non-detachable connection of the two parts.

2. Method according to claim 1, in which at least one subsequently manufactured part is injected at least partly into a moulding recess of the previously manufactured part, characterised in that on the respectively first part manufactured, in its connecting region with a rotatable part (18) to be manufactured subsequently, an approximately hollow-cylindrical element (1) which is burr-free on its inner face (3) is formed, which is enclosed to this end by a mould (10) for the subsequent part (18), whose inner face (11) is provided in the region of the hollow-cylindrical element (1) with a recess (12) of constant cross-section over its entire circumference, and then the subsequent part (18) is injection moulded, the part first manufactured being pushed outward by the pressure of the injected material in the region of the hollow cylinder (1) and the recess (12) abutting the mould inner face (11).

3. Method according to claim 2, characterised in that the recess (12) in the inner face (11) of the mould (10) for the subsequent part (18) is concavely curved in the axial direction (17) of the hollow cylinder (1).

4. Method according to claim 1, in which at least one subsequently manufactured part is injected at least partly around the first part manufactured, characterised in that on the respectively first-manufactured part, in its connecting region to a rotatable part (29) to be manufactured subsequently, an approximately hollow-cylindrical element (1) which is burr-free on its outer face (4) is formed, which to this end is surrounded by a mould (21) for the subsequent part (29), in which a rotationally symmetrical core (23) is disposed concentrically to the hollow-cylindrical element (1), which has in its section (25) projecting into the hollow cylindrical element (1) a tapering cross-section, and then the subsequent part (29) is injection moulded, the part first manufactured being pushed inward in the region of the hollow cylinder (1) by the pressure of the injected material and abutting the tapering section (25) of the core (23).

5. Method according to claim 4, characterised in that the tapering section (25) of the core (23) in the mould for the subsequent part (29) is concavely curved in the axial direction (17) of the hollow cylinder (1).

## Revendications

1. Procédé pour mouler par injection des objets constitués d'au moins deux parties indépendantes, reliées en étant mobiles en rotation l'une par rapport à l'autre, la partie chaque fois fabriquée en second lieu étant au moins partiellement formée par injection dans une cavité de moulage de la partie fabriquée auparavant, ou au moins partiellement moulée par injection autour de la partie fabriquée auparavant, et un élément sensiblement cylindrique creux étant formé par moulage sur la partie chaque fois fabriquée en premier lieu, dans la zone de liaison de cette dernière à une partie mobile en rotation devant être fabriquée ensuite, caractérisé en ce que l'élément cylindrique creux (1) est réalisé sous forme d'un élément déformable de manière élastique, et est entouré, pour y mouler la partie suivante, d'un moule (10; 21) pour la partie suivante (18; 29), et en ce que lors de la fabrication de cette partie (18; 29), on réalise l'injection soit dans l'espace extérieur à l'élément cylindrique creux (1) obturé par un noyau (23), soit dans son espace intérieur (9) non obturé, la partie fabriquée en premier lieu étant déformée dans la zone du cylindre creux (1), exclusivement par la pression du matériau injecté, pour former une contre-dépouille à symétrie de révolution assurant une liaison indémontable des deux parties.

2. Procédé selon la revendication 1, dans lequel au moins une partie fabriquée en second lieu est moulée par injection, au moins partiellement, dans une cavité de moulage de la partie fabriquée auparavant, caractérisé en ce que sur la partie chaque fois fabriquée en premier lieu est moulé, dans sa zone de liaison à une partie mobile en rotation (18), à fabriquer ensuite, un élément (1) sensiblement cylindrique creux et exempt de bavures sur sa face intérieure (3), qui est ensuite entouré par un moule (10) pour la partie (18) suivante, dont la face intérieure (11), dans la zone de l'élément cylindrique creux (1), est pourvue d'un creux (12) de section transversale constante sur toute la périphérie de l'élément (1), la partie suivante (18) étant alors moulée par injection, et la partie fabriquée en premier lieu étant repoussée vers l'extérieur dans la zone du cylindre creux (1), par la pression du matériau injecté, et appliquée dans le creux (12) sur la face intérieure (11) du moule.

3. Procédé selon la revendication 2, caractérisé en ce que le creux (12) dans la face intérieure (11) du moule (10) pour la partie suivante (18) présente une courbure concave dans la direction axiale (17) du cylindre creux (1).

4. Procédé selon la revendication 1, dans lequel au moins une partie fabriquée en second lieu est moulée par injection, au moins partiellement, autour de la partie fabriquée auparavant, caractérisé en ce que sur la partie chaque fois fabriquée en premier lieu est moulé, dans sa zone de liaison à une partie mobile en rotation (29), à fabriquer ensuite, un élément (1) sensiblement cylindrique creux et exempt de bavures sur sa face extérieure (4), qui est ensuite entouré par un moule (21) pour la partie suivante (29), dans lequel est disposé, concentriquement à l'élément cylindrique creux (1), un noyau (23) à symétrie de révolution, qui dans son tronçon (25) faisant saillie à l'intérieur de l'élément cylindrique creux (1), présente une section transversale qui se rétrécit, la partie suivante (29) étant alors moulée par injection, et la partie fabriquée en premier lieu étant repoussée vers l'intérieur dans la zone du cylindre creux (1), par la pression du matériau injecté, et appliquée sur le tronçon (25), qui se rétrécit, du noyau (23).

5. Procédé selon la revendication 4, caractérisé en ce que le tronçon (25), qui se rétrécit, du noyau (23), dans le moule pour la partie suivante (29), présente une courbure concave dans la direction axiale (17) du cylindre creux (1).
